# FASCICULE DE BREVET EUROPEEN

(11) **EP 3 645 898 B1**
(45) Date de publication et mention de la délivrance du brevet: **19.05.2021**
(21) Numéro de dépôt: 18748999.2
(22) Date de dépôt: 26.06.2018
(51) Int. Cl.: F16B 21/04, F16B 7/20

(54) **SYSTÈME DE VERROUILLAGE ET DÉVERROUILLAGE A BAÏONNETTE POUR CONNECTEUR CIRCULAIRE AVEC INDICATEUR SONORE**
BAJONETTVER- UND -ENTRIEGELUNGSSYSTEM FÜR RUNDSTECKER MIT HÖRBARER ANZEIGE
BAYONET-TYPE LOCKING AND UNLOCKING SYSTEM FOR CIRCULAR CONNECTOR WITH AUDIBLE INDICATOR

(30) Priorité: 26.06.2017 FR 1755845
(43) Date de publication de la demande: 06.05.2020
(73) Titulaire: SOURIAU, 78000 Versailles Cedex (FR)
(72) Inventeur: SALMON, Xavier, 72560 Change (FR)
(74) Mandataire: Ipside
(86) Numéro de dépôt international: PCT/FR2018/051542
(87) Numéro de publication internationale: WO 2019/002741

(56) Documents cités:
- EP-A1- 1 862 719
- DE-A1-102015 013 881
- FR-A1- 2 808 570

## Description

### DOMAINE TECHNIQUE DE L'INVENTION

La présente invention concerne un système de verrouillage et déverrouillage à baïonnette pour connecteur circulaire avec indicateur sonore de verrouillage.

L'invention concerne un système de verrouillage permettant de bloquer le système en position verrouillée quelles que soient les vibrations et/ou chocs de l'environnement extérieur.

L'invention trouve des applications dans tous les domaines nécessitant le verrouillage d'un connecteur sur un autre élément. Elle trouve notamment des applications dans le domaine de la connectique et, en particulier, dans les domaines de la connectique pour environnements sévères tels que l'aéronautique, le spatial, l'automobile, les matériels ferroviaires et industriels où les connecteurs sont souvent soumis à de fortes vibrations dans leurs environnements.

L'invention trouve des applications dans les domaines de la connectique en particulier dans des environnements sombres ou difficiles d'accès où il est malaisé de visualiser le complet verrouillage et où le déverrouillage doit pouvoir s'effectuer aisément par simple rotation et sans manipulation complexe d'un seul et unique élément.

L'invention trouve des applications dans les domaines de la connectique utilisant des contacts à très faible course de fonctionnement.

L'invention trouve également des applications dans les domaines de la connectique nécessitant une absence de mobilité de la fiche par rapport à l'embase lors du blocage du verrouillage et lors de traction sur le câblage.

### ETAT DE LA TECHNIQUE

On appelle système de verrouillage et déverrouillage à baïonnette pour connecteur circulaire un ensemble composé d'au moins d'un ergot fixé sur un des connecteurs, d'au moins une rampe de verrouillage aménagée sur l'autre connecteur et d'un système élastique.

Ce système permet, par rotation angulaire limitée, de réunir et de maintenir en position les deux connecteurs. Le blocage en position verrouillée est assuré par un usinage en creux aménagé dans la rampe de verrouillage qui emprisonne l'ergot et rend difficile la déconnexion.

Dans certaines applications, notamment dans les domaines de la connectique aéronautique ou automobile, les fortes vibrations environnementales génèrent des déplacements des éléments de connexion l'un par rapport à l'autre. Ces déplacements peuvent entraîner une perte du signal entre les contacts de l'embase et ceux de la fiche.

Pour éviter tout déplacement de l'embase par rapport au corps de fiche, il est connu de munir chaque connexion par un système de verrouillage et déverrouillage à baïonnette permettant de verrouiller la liaison entre les deux éléments de connexion et ainsi empêcher des déconnexions intempestives. Un tel système de verrouillage doit permettre de maintenir la connexion, même lorsque l'ensemble connecteur est soumis à des vibrations.

Les systèmes de verrouillage et déverrouillage à baïonnette ont comme inconvénient de nécessiter un jeu de fonctionnement et un système élastique pour permettre le déplacement des connecteurs entre eux lors du verrouillage et du déverrouillage et aussi pour permettre de les maintenir en pression entre eux après verrouillage complet.

Ce principe de fonctionnement n'est pas acceptable dans le cas d'utilisation de contacts à très faible course de fonctionnement.

Il est connu que les systèmes de verrouillage et déverrouillage à baïonnette ont comme inconvénient de générer soit le recul d'un des connecteurs lors du passage de l'ergot dans le creux de la rampe de verrouillage, soit de permettre le déplacement d'un des connecteurs en cas de traction sur les câblages selon le positionnement du système élastique.

Il est connu que les systèmes de verrouillage et déverrouillage à baïonnette ont comme inconvénient de ne pas rendre perceptible la fin de verrouillage dans le cas où un fort couple de verrouillage est nécessaire. Ce manque de perception doit alors être compensé par un environnement permettant de visualiser alors le complet verrouillage. Il est connu que les connecteurs utilisés dans les environnements sévères répondent généralement à des normes qui définissent le profil des rampes de verrouillage des connecteurs.

Un élément de raccord à rainure de verrouillage est connu du document EP 1 862 719 A1.

### OBJET DE L'INVENTION

La présente invention vise à remédier à ces inconvénients.

A cet effet, la présente invention vise un système de verrouillage et déverrouillage à baïonnette pour connecteur circulaire avec indicateur sonore de verrouillage qui comporte :
- une embase comportant au moins un ergot ;
- un corps de fiche s'insérant dans l'embase ;
- une bague externe comportant une rainure axiale sur la paroi intérieure de la bague externe dans laquelle vient s'insérer une rondelle intermédiaire entrainant sa rotation, ladite bague externe comporte au moins une rampe de déblocage dont la pente est adaptée pour coopérer en phase de déverrouillage avec un ergot de déblocage d'un verrou ;
- une bague de verrouillage comportant au moins une rampe de verrouillage dans laquelle coulisse en translation un ergot de l'embase, ladite rampe de verrouillage est composée de trois parties, une partie axiale, une partie hélicoïdale et une partie circulaire ;
- l'ergot de l'embase coulisse successivement lors du verrouillage dans la partie axiale, la partie hélicoïdale et la partie circulaire de la rampe de verrouillage;
- un verrou comportant au moins un cran de blocage, au moins un ergot de déblocage et au moins une clavette de guidage ledit verrou est mobile en translation axiale par rapport à la bague de verrouillage par l'intermédiaire de la clavette de guidage et d'une rainure de guidage, l'ergot de déblocage du verrou est adapté à coopérer avec le la rampe de déblocage de la bague externe en phase de déverrouillage uniquement ;
- ledit système comporte une position de déverrouillage dans laquelle le cran de blocage du verrou est positionné dans la rainure de guidage laissant l'ergot de l'embase libre de translater vers la partie hélicoïdale de la rampe de verrouillage ;
- ledit système comporte une position de verrouillage dans laquelle le cran de blocage du verrou est positionné dans la rainure de guidage bloquant la position de l'ergot de l'embase dans la partie circulaire de la rampe de verrouillage ;
- une rondelle intermédiaire insérée dans la bague externe; ladite rondelle intermédiaire possède une clavette périphérique liée en rotation par la rainure axiale de la bague externe; ladite rondelle intermédiaire possède également une clavette latérale liée en rotation par le logement de la bague de verrouillage en phase de verrouillage.

Ce type de verrouillage ne peut être déverrouillé que par une intervention humaine et par simple rotation d'une bague externe, sans mouvement combiné et sans manipulation d'autre élément.

La mise en œuvre permet donc d'être réalisée en milieu sombre ou difficile d'accès. La fin du verrouillage est audible quel que soit le couple de verrouillage à appliquer afin que l'utilisateur sache que la connexion est complètement réalisée.

Ce type de verrouillage donne un système de connexion précis qui ne génère aucun mouvement lors du blocage du verrouillage ou en cas de traction sur le câble. Le système permet une utilisation de contacts avec une plage faible de fonctionnement (<0,50 mm).

Ainsi, l'embase et le corps de fiche sont bloqués par le verrou.

Il n'y a pas de déplacement de la fiche et de l'embase l'un par rapport à l'autre en phase de blocage ou de déblocage.

Le cran de blocage du verrou forme un système anti-déverrouillage. L'ergot de l'embase est bloqué dans la partie circulaire de la rampe de verrouillage et est libéré seulement en phase de déverrouillage par la mise en rotation de la bague externe qui entraine la bague de verrouillage par l'intermédiaire du verrou.

L'invention est avantageusement mise en œuvre selon les modes de réalisation et les variantes exposées ci-après, lesquelles sont à considérer individuellement ou selon toute combinaison techniquement opérante.

Dans un mode de réalisation, la rondelle intermédiaire est composée :
- d'une clavette périphérique positionnée sur la partie périphérique de la rondelle intermédiaire, et
- d'une clavette latérale positionnée sur une des faces latérales de la rondelle intermédiaire.

La clavette périphérique est positionnée dans la rainure axiale de la bague externe. La rondelle intermédiaire permet de faire la relation entre la rotation de la bague externe et la rotation de la bague de verrouillage uniquement dans la phase de verrouillage.

Dans un mode de réalisation, ledit système comporte un élément élastique adapté à déplacer le verrou selon l'axe longitudinal de la rainure de guidage.

Dans un mode de réalisation, l'élément élastique est un ressort positionné entre le verrou et la rondelle intermédiaire. Le système comporte un ressort de rappel adapté à déplacer-le verrou selon l'axe longitudinal du corps de fiche.

Dans un mode de réalisation, une rondelle élastique est positionnée entre le corps de fiche et l'embase.

La rondelle élastique permet de combler le jeu résiduel du verrouillage. Le jeu résiduel correspond au jeu résultant des ajustements entre les différentes pièces. La rondelle élastique permet de maintenir en place et sous pression les connecteurs afin de ne pas avoir d'éléments flottants susceptibles de se dégrader en environnement sévère.

Dans un mode de réalisation, le cran de blocage du verrou comporte une pente oblique. La pente oblique permet de faire coulisser le verrou et de comprimer le ressort de rappel au moment du passage de l'ergot de l'embase.

Dans un mode de réalisation, la bague de verrouillage comporte un logement.

Dans un mode de réalisation, la clavette latérale de la rondelle intermédiaire se place dans le logement. La clavette latérale intervient uniquement lors de la phase de verrouillage. La clavette latérale permet de transmettre le mouvement de rotation appliqué par l'opérateur sur la bague externe à la bague de verrouillage sans exercer de contrainte sur l'ergot de déblocage du verrou. Cette absence de contrainte permet au verrou de revenir librement en position de blocage une fois l'ergot de l'embase dans la partie circulaire de la rampe de verrouillage et ainsi de générer un claquement audible.

Dans un mode de réalisation, la rampe de déblocage a une forme triangulaire.

La partie pentue de la rampe de déblocage intervient uniquement en phase de déverrouillage. Le mouvement de rotation appliqué à la bague externe déplace la partie pentue de la rampe de déblocage au contact de l'ergot de déblocage du verrou et entraine ainsi le déplacement du verrou dans la rainure de guidage en comprimant le ressort de rappel. Ce déplacement libère ainsi l'ergot de l'embase qui se trouve dans la partie circulaire de la rampe de verrouillage de la bague de verrouillage.

La partie droite et parallèle à l'axe de la bague externe doit être positionnée à distance de l'ergot de déblocage tout au long de la phase de verrouillage afin qu'il n'y ait pas de frottement qui puisse freiner le retour du verrou en position de blocage afin de générer le signal sonore témoin du parfait verrouillage.

Enfin, la partie droite et perpendiculaire à l'axe de la bague externe doit être positionnée de manière à ne jamais intervenir sur l'ergot de déblocage tout au long des phases de verrouillage et de déverrouillage.

### BREVE DESCRIPTION DES FIGURES

D'autres avantages, buts et caractéristiques de la présente invention apparaitront à la lumière de la description détaillée qui suit, réalisée sur la base des dessins annexés, dans un but explicatif et nullement limitatif, la description détaillée est à lire en relation avec les dessins annexés dans lesquels:
- la figure 1 représente une vue éclatée du système de verrouillage à baïonnette selon un exemple de réalisation de la présente invention,
- la figure 2 représente la rondelle intermédiaire selon un exemple de réalisation de la présente invention,
- la figure 3 représente à gauche une vue de la bague de verrouillage insérée dans la bague externe selon un exemple de réalisation de la présente invention. La figure 3 représente à droite une autre vue de la bague de verrouillage insérée dans la bague externe et un écorché montrant le positionnement de la clavette périphérique et de la clavette latérale de la rondelle intermédiaire selon un exemple de réalisation de la présente invention,
- la figure 4 représente à gauche, une vue éclatée et au centre une vue assemblée montrant le positionnement du ressort de rappel et du verrou sur la bague de verrouillage selon un exemple de réalisation de la présente invention. La figure 4 représente à droite, un détail montrant la pente oblique du cran de blocage et le positionnement du cran de blocage obstruant la rampe de verrouillage selon un exemple de réalisation de la présente invention,
- les figures 5 à 9 représentent les phases de verrouillage et de blocage selon un mode de réalisation du verrouillage du corps de fiche à l'embase,
- la figure 10 représente une vue en coupe selon un profil transversal du corps de fiche et de l'embase, verrouillées par la bague de verrouillage et maintenues en position sous pression par la rondelle élastique selon un exemple de réalisation de la présente invention,
- les figures 11 à 15 représentent un mode de réalisation du déverrouillage du corps de fiche de l'embase avec la bague externe,
- les figures 16 à 20 représentent un mode de réalisation du déverrouillage du corps de fiche de l'embase sans la bague externe.

### DESCRIPTION D'EXEMPLES DE REALISATION DE L'INVENTION

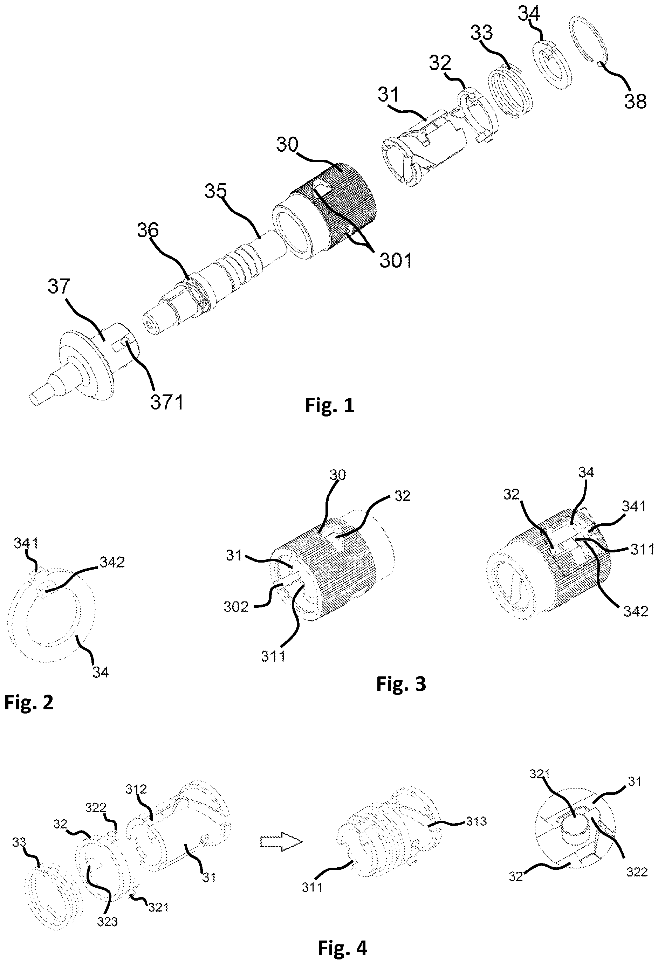

La figure 1 représente l'embase 37, l'ergot 371, la rondelle élastique 36, le corps de fiche 35, la bague externe 30, la rampe de déblocage 301, la bague de verrouillage 31, le verrou 32, le ressort de rappel 33 et la rondelle intermédiaire 34, et l'anneau d'arrêt 38.

L'embase 37 comporte sur sa partie externe au moins un ergot d'embase 371 adapté à coopérer avec la bague de verrouillage 31. Dans un mode de réalisation, l'embase 37 comporte sur sa partie externe trois ergots 371. Un corps de fiche 35 se positionne à l'intérieur de l'embase 37. Le corps de fiche 35 comporte plusieurs parties cylindriques circulaires dont le cylindre est plus ou moins épais. Sur le corps de fiche 35 est positionnée une rondelle élastique 36 permettant de combler le jeu résiduel résultant du verrouillage. Une bague de verrouillage 31 vient par-dessus le corps de fiche 35 et une partie de l'embase 37. La bague de verrouillage 31 permet de connecter et maintenir ensemble le corps de fiche 35 à l'embase 37. Un verrou 32, un ressort de rappel 33 et une rondelle intermédiaire 34 sont adaptés à coopérer avec la bague de verrouillage 31. La bague externe 30 entoure l'ensemble du système, et comporte une rampe de déblocage 301 adaptée à coopérer avec le verrou 32.

La figure 2 représente selon un mode de réalisation la rondelle intermédiaire 34 comportant une clavette périphérique 341 et une clavette latérale 342. La clavette périphérique 341 est située sur la partie périphérique de la rondelle intermédiaire 34. La clavette latérale 342 est située sur une des faces de la rondelle intermédiaire 34. La clavette latérale 342 est située au niveau de la clavette périphérique.

La figure 3 représente à gauche une vue de la bague de verrouillage 31 insérée dans la bague externe 30 selon un mode de réalisation. La bague externe 30 comporte sur la face interne une rainure axiale 302 s'étendant selon l'axe longitudinal de la bague externe 30. Dans le mode de réalisation représenté, la face interne de la bague externe 30 comporte trois rainures axiales 302. Ces 3 rainures axiales 302 permettent le passage des ergots de déblocage 321 du verrou 32 lors de l'assemblage du connecteur.

La bague externe 30 est également composée d'une rampe de déblocage 301 présentant une partie pentue. La rampe de déblocage 301 coopère avec l'ergot de déblocage 321 du verrou 32. En phase de déverrouillage et lorsque la bague externe entre en rotation, la partie pentue de la rampe de déblocage 301 exerce une pression sur l'ergot de déblocage 321 du verrou 32. Le déplacement de l'ergot de déblocage entraine le coulissement du verrou 32 permettant le déblocage de l'embase sur le corps de fiche. Le cran de blocage du verrou permet de bloquer ou non l'ergot 371 de l'embase 37.

Dans un mode de réalisation, la bague externe 30 est composée de trois rampes de déblocage 301.

A droite de cette figure est représentée une zone en pointillés qui correspond à une partie de la bague externe 30 enlevée. Cette zone offre la possibilité de visualiser le positionnement de la rondelle intermédiaire 34 dans lequel la clavette périphérique 341 est insérée dans une des rainures axiale 302. Elle permet également de visualiser le positionnement de la clavette latérale 342 dans le logement 311.

La bague de verrouillage 31 est contenue à l'intérieur de la bague externe 30. La bague externe 30 possède sur la face extérieure une partie moletée. Dans une des variantes, toute la surface extérieure est moletée. La clavette périphérique 341 vient se loger dans la rainure axiale 302.

Un logement 311 est créé dans la bague de verrouillage 31 pour recevoir la clavette latérale 342. Lors de la mise en rotation de la bague externe 30, la clavette périphérique 341 est entrainée dans la rainure axiale 302 et la rondelle intermédiaire 34 entre à son tour en rotation.

La figure 4 à gauche représente le positionnement du ressort de rappel 33 et du verrou 32 sur la bague de verrouillage 31. La bague de verrouillage 31 comporte une rampe de verrouillage 313. Dans le mode de réalisation représenté, la bague de verrouillage 31 comporte trois rampes de verrouillage 313.

Chaque rampe de verrouillage 313 est composée de trois parties successives, la partie axiale 314, la partie hélicoïdale 315 et, la partie circulaire 316.
Le terme partie axiale signifie une forme linéaire passant par une parallèle à l'axe longitudinal. Le terme partie hélicoïdale signifie une forme hélicoïdale tournant autour d'un axe parallèle à l'axe longitudinal. Le terme partie circulaire signifie une forme linéaire passant par une perpendiculaire à l'axe longitudinal.

La bague de verrouillage 31 possède deux extrémités. Une des extrémités de la bague de verrouillage 31 comporte l'extrémité de la rainure de guidage 312.

L'autre extrémité de la bague de verrouillage 31 comporte l'extrémité libre de la rampe de verrouillage 313 ; l'extrémité libre de la rampe de verrouillage 313 est constituée par la partie axiale 314 suivie de la partie hélicoïdale 315 et terminée en pleine matière par la partie circulaire 316.

Le ressort de rappel 33 est positionné sur l'extrémité de la bague de verrouillage 31 opposée à l'extrémité de la bague de verrouillage 31 où débouche la rampe de verrouillage 313.

Le verrou 32 comporte un ergot de déblocage 321, et un cran de blocage 322 du verrou 32.

Sur cette figure, au centre, le verrou 32 vient se placer autour de la bague de verrouillage 31 et comporte au moins un cran de blocage 322.
Dans le mode de réalisation représenté, le verrou 32 comporte trois crans de blocage. Le cran de blocage 322 du verrou 32 comporte au moins une clavette de guidage 323 adaptée à coopérer en translation avec la rainure de guidage 312 de la bague de verrouillage 31.

La partie verticale du cran de blocage 322 permet d'empêcher le déverrouillage. Le cran de blocage 322 du verrou 32 comporte également une pente oblique formant un angle d'au moins 35° avec la partie verticale du cran de blocage.

Dans un mode de réalisation l'angle formé par la partie verticale et la pente oblique est de 45°. La pente oblique du cran de blocage du verrou 32 est adaptée pour coopérer avec l'ergot 371 de l'embase 37.

Le ressort de rappel 33 vient se placer sur la bague de verrouillage 31 à côté du verrou 32 du côté opposé au cran de blocage 322. Lorsque la pression exercée sur le ressort de rappel 33 n'est plus effective, le ressort de rappel 33 repousse rapidement le verrou 32 dans sa position initiale et entraine un bruit sonore représentatif qui annonce le verrouillage.
Dans un mode de réalisation, l'ergot de déblocage 321 est positionné sur le cran de blocage 322 afin de bénéficier de la rigidité mécanique desdits crans de blocage.

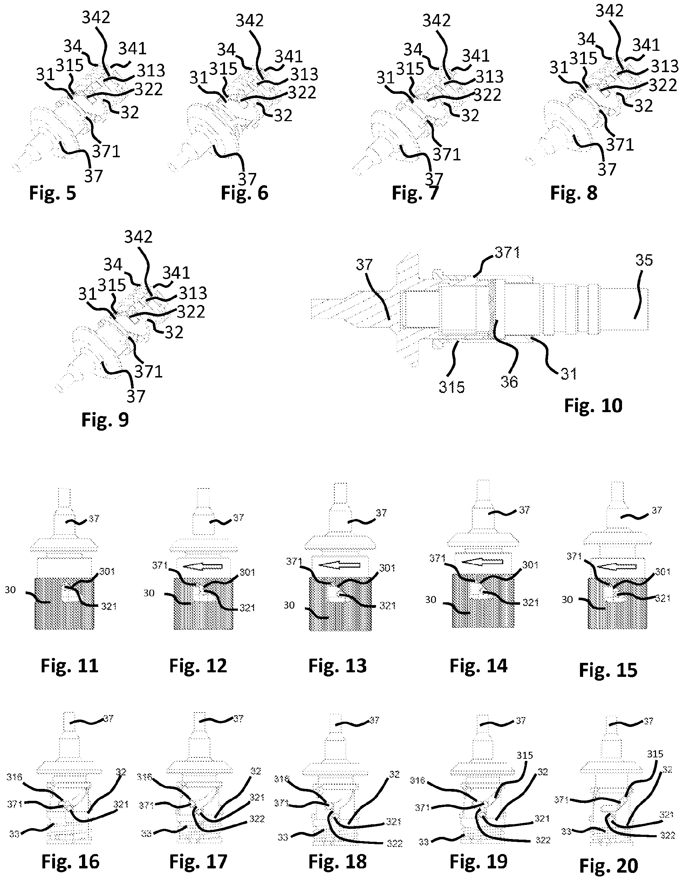

Les figures 5 à 9 représentent les différentes phases d'un mode de réalisation du verrouillage du corps de fiche 35 à l'embase 37. Le verrouillage est composé d'une position de début de verrouillage représentée par la figure 5, de plusieurs positions intermédiaires représentées par les figures 6 à 8 et d'une position verrouillée représentée par la figure 9.
La figure 5 représente la position de début de verrouillage lorsque l'ergot 371 de l'embase 37 vient d'être engagé dans la partie axiale 314 de la rampe de verrouillage 313 de la bague de verrouillage 31 jusqu'à venir en contact avec la partie hélicoïdale 315 de ladite rampe de verrouillage 313.

La figure 6 représente une des positions intermédiaires lorsque l'ergot 371 de l'embase 37 est à l'extrémité de la partie hélicoïdale 315. L'ergot 371 de l'embase 37 est en contact avec la pente oblique du cran de blocage 322. Le cran de blocage 322 est à sa position initiale, en butée avec la bague de verrouillage du fait de la poussée du ressort de rappel.

La figure 7 représente une des positions intermédiaires lorsque l'ergot 371 de l'embase 37 entre en relation avec la pente oblique du cran de blocage du verrou 32. Lorsque l'ergot 371 de l'embase 37 entre en relation avec la pente oblique du cran de blocage 322 du verrou 32, le cran de blocage 322 se déplace en translation axiale dans la rainure de guidage 312. La translation entraine ainsi la déformation axiale du ressort de rappel 33.

La figure 8 représente une autre position intermédiaire. Cette position correspond au passage de l'ergot 371 de l'embase 37 de la partie hélicoïdale 315 de la rampe de verrouillage 313 de la bague de verrouillage 31 à la partie circulaire 316 de la rampe de verrouillage 313 de la bague de verrouillage 31.

La figure 9 représente la position de déverrouillage dans laquelle, l'ergot 371 de l'embase 37 est dans la partie circulaire 316 de la rampe de verrouillage 313 de la bague de verrouillage 31. Le cran de blocage 322 du verrou 32 est revenu à sa position initiale en butée dans la rampe de verrouillage 313 L'ergot 371 de l'embase 37 est bloqué par la partie verticale du cran de blocage 322 dans la partie circulaire 316 de la rampe de verrouillage 313. Le ressort de rappel 33 est également revenu à sa position initiale. Le retour du ressort de rappel 33 à sa position initiale entraine un choc entre le cran de blocage 322 et la rampe de verrouillage 313 qui génère un bruit de claquement qui notifie à l'opérateur que le verrouillage est effectif.

La figure 10 représente le positionnement du corps de fiche 35 dans l'embase 37, verrouillé par la bague de verrouillage 31. Le jeu résiduel résultant du verrouillage du corps de fiche 35 dans l'embase 37 par la bague de verrouillage est comblé par la rondelle élastique 36.

Les figures 11 à 15 représentent un mode de réalisation du déverrouillage du corps de fiche 35 de l'embase 37 recouverts par la bague externe 30 afin de visualiser l'interaction entre l'ergot de déblocage 321 et la rampe de déblocage 301.

Les figures 16 à 20 représentent un mode de réalisation du déverrouillage du corps de fiche 35 de l'embase 37 sans la bague externe afin de visualiser les interactions entre l'ergot 371 de l'embase 37, le cran de blocage 322, la rampe de verrouillage 313, la rondelle intermédiaire (non visible mais qui suit le mouvement de la bague externe) et le ressort de rappel 33.

Le déverrouillage est composé d'une position verrouillée représentée par les figures 11 et 16, plusieurs positions intermédiaires représentées par les figures 12 à 14 et 17 à 19 et une position déverrouillée représentée par les figures 15 et 20.

Les figures 11 et 16 représentent la position de verrouillage dans laquelle, l'ergot 371 de l'embase 37 est dans la partie circulaire 316 de la rampe de verrouillage 313.

Le cran de blocage 322 du verrou 32 est en appui dans la rampe de verrouillage 313 sous la pression du ressort 33.

L'ergot 371 de l'embase 37 est bloqué dans partie circulaire 316 de la rampe de verrouillage 313 par la partie verticale du cran de blocage 322. Le ressort de rappel 33 est à sa position initiale.

Les figures 12 et 17 représentent une des positions intermédiaires lorsque l'ergot de déblocage 321 du verrou 32 entre en relation avec la rampe de déblocage 301 de la bague externe 30.

Lorsque la bague externe entre en rotation et du fait du contact entre l'ergot 371 de l'embase 37 et le cran de blocage 322, la partie pentue de la rampe de déblocage 301 de la bague externe 30 entre en relation avec l'ergot de déblocage 321 du verrou 32 entrainant la translation axiale du verrou 32 dans la rainure de guidage 312 et la compression du ressort de rappel 33.

Les figures 13 et 18 représentent une autre des positions intermédiaires où le ressort de rappel 33 continue d'être comprimé par la translation du verrou 32.

Le couple appliqué sur la bague externe 30 pour déverrouiller les connecteurs, combiné avec les efforts résultants du contact entre l'ergot de déblocage 321 et la partie pentue de la rampe de déblocage 301 génère un déplacement angulaire de la bague de verrouillage 31 qui maintient l'ergot 371 de l'embase 37 au contact de la partie verticale du cran de blocage 321 du verrou 32. L'ergot 371 de l'embase 37 se déplace dans la partie circulaire 316 de la rampe de verrouillage 313.
L'ergot 371 de l'embase 37 est sur le point d'être libéré par la partie verticale du cran de blocage 322 du verrou 32.

Les figures 14 et 19 représentent une autre des positions de déverrouillage lorsque l'ergot 371 de l'embase 37 translate de la partie circulaire 316 vers la partie hélicoïdale 315 de la rampe de verrouillage 313. Les figures 15 et 20 représentent la position de déverrouillage lorsque l'ergot 371 de l'embase 37 continue de coulisser dans la partie hélicoïdale 315 vers la partie axiale 314 de la rampe de verrouillage 313 pour obtenir le complet déverrouillage des connecteurs.

Décomposition de la phase de verrouillage après approche des deux connecteurs :
- Rotation de la bague externe
- Rotation de la rondelle intermédiaire
- Rotation de la bague de verrouillage
- Cheminement de l'ergot de l'embase dans la partie axiale de la rampe de verrouillage
- Cheminement de l'ergot de l'embase dans la partie hélicoïdale de la rampe de verrouillage
- L'ergot de l'embase vient au contact de la pente du cran de blocage
- Recul en translation du cran de blocage sur la bague de verrouillage par liaison rainure de guidage / clavette de guidage
- Compression le ressort de rappel
- Une fois qu'il y a suffisamment de place, translation de l'ergot de l'embase vers la partie circulaire de la rampe de verrouillage
- Retour en position repos du cran de blocage quand il n'y a plus de contact avec l'ergot de l'embase du fait de la poussée du ressort de rappel
- Génération d'un signal sonore audible.

Décomposition de la phase de déverrouillage des deux connecteurs :
- Rotation de la bague externe
- Mise en contact de l'ergot de déblocage avec la rampe de déblocage
- Recul de l'ergot de déblocage sur la pente de la rampe de déblocage avec compression le ressort de rappel
- Libération de l'ergot de l'embase
- Rotation de la bague de verrouillage
- Déplacement de l'ergot de l'embase vers la partie hélicoïdale puis axiale de la rampe de verrouillage
- Déconnexion
- Le verrou reprend sa place de repos du fait de la poussée du ressort et du déplacement de l'ergot de l'embase
- La bague de verrouillage reprend sa position par rapport à la bague externe du fait de la sortie de l'ergot de l'embase de la partie axiale de la rampe de verrouillage.

### NOMENCLATURE

- 30: Bague externe
- 301: Rampe de déblocage
- 302: Rainure axiale
- 31: Bague de verrouillage
- 311: Logement
- 312: Rainure de guidage
- 313: Rampe de verrouillage
- 314: Partie axiale de la rampe de verrouillage
- 315: Partie hélicoïdale de la rampe de verrouillage
- 316: Partie circulaire de la rampe de verrouillage
- 32: Verrou
- 321: Ergot de déblocage
- 322: Cran de blocage
- 323: Clavette de guidage
- 33: Ressort de rappel
- 34: Rondelle intermédiaire
- 341: Clavette périphérique
- 342: Clavette latérale
- 35: Corps de fiche
- 36: Rondelle élastique
- 37: Embase
- 371: Ergot
- 38: Anneau d'arrêt

## Revendications

1. Système de verrouillage et déverrouillage à baïonnette pour connecteur circulaire avec indicateur sonore de verrouillage qui comporte :
- une embase (37) comportant au moins un ergot ;
- un corps de fiche (35) s'insérant dans l'embase (37) ;
- une bague externe (30) comportant une rainure axiale (302) sur la paroi intérieure de la bague externe (30), ladite bague externe (30) comporte au moins une rampe de déblocage(301) ;
- un ergot de déblocage (321) ;
- une bague de verrouillage (31) comportant au moins une rampe de verrouillage (313), ladite rampe de verrouillage (313) est composée de trois parties, une partie axiale (314), une partie hélicoïdale (315) et une partie circulaire (316) ;
ledit système est **caractérisé en ce qu'**il comporte :
- dans la rainure axiale (302) de la bague externe (30) vient s'insérer une rondelle intermédiaire (34) entrainant sa rotation, et que la pente de la rampe de déblocage (301) est adaptée pour coopérer en phase de déverrouillage avec l'ergot de déblocage (321) d'un verrou (32) ;
- dans la rampe de verrouillage (313) bague de verrouillage (31) coulisse en translation un ergot (371) de l'embase (37) ;
- l'ergot (371) de l'embase (37) coulisse successivement lors du verrouillage dans la partie axiale (314), la partie hélicoïdale (315) et la partie circulaire (316) de la rampe de verrouillage (313) ;
- le verrou (32) comportant au moins un cran de blocage (322), au moins un ergot de déblocage (321) et au moins une clavette de guidage (323) ; ledit verrou (32) est mobile en translation axiale par rapport à la bague de verrouillage (31) par l'intermédiaire de la clavette de guidage (323) et d'une rainure de guidage (312), l'ergot de déblocage (321) du verrou (32) est adapté à coopérer avec le la rampe de déblocage (301) de la bague externe (30) en phase de déverrouillage uniquement ;
- ledit système comporte une position de déverrouillage dans laquelle le cran de blocage (322) du verrou (32) est positionné dans la rainure de guidage (312) laissant l'ergot (371) de l'embase libre de translater vers la partie hélicoïdale (315) de la rampe de verrouillage (313) ;
- ledit système comporte une position de verrouillage dans laquelle le cran de blocage (322) du verrou (32) est positionné dans la rainure de guidage (312) bloquant la position de l'ergot (371) de l'embase dans la partie circulaire (316) de la rampe de verrouillage (313) ;
- une rondelle intermédiaire (34) insérée dans la bague externe (30); ladite rondelle intermédiaire (34) possède une clavette périphérique (341) liée en rotation par la rainure axiale (302) de la bague externe; ladite rondelle intermédiaire (34) possède également une clavette latérale (342) liée en rotation par le logement (311) de la bague de verrouillage (31) en phase de verrouillage.

2. Système selon la revendication 1, dans lequel la rondelle intermédiaire (34) est composée :
- la clavette périphérique (341) positionnée sur la partie périphérique de la rondelle intermédiaire (34), et ;
- la clavette latérale (342) positionnée sur une des faces latérales de la rondelle intermédiaire (34).

3. Système selon la revendication 1, dans lequel ledit système comporte un élément élastique adapté à déplacer le verrou (32) selon l'axe longitudinal de la rainure de guidage (312).

4. Système selon la revendication 2, dans lequel l'élément élastique est un ressort de rappel (33) positionné entre le verrou (32) et la rondelle intermédiaire (34).

5. Système selon la revendication 1, dans lequel une rondelle élastique (36) est positionnée entre le corps de fiche (35) et l'embase (37).

6. Système selon la revendication 1, dans lequel le cran de blocage (322) du verrou (32) comporte une pente oblique.

7. Système selon la revendication 1, dans lequel la bague de verrouillage (31) comporte un logement (311).

8. Système selon les revendications 2 et 7, dans lequel la clavette latérale (342) de la rondelle intermédiaire (34) se place dans le logement (311).

## Patentansprüche

1. Bajonettverriegelungs- und -entriegelungssystem für Rundstecker mit hörbarer Verriegelungsanzeige, Folgendes beinhaltend:
- einen Sockel (37), der mindestens einen Zapfen beinhaltet;
- einen Steckverbinderkörper (35), der in den Sockel (37) eingeführt wird;
- einen Außenring (30), der eine axiale Nut (302) an der Innenwand des Außenringes (30) beinhaltet, wobei der Außenring (30) mindestens eine Freigaberampe (301) beinhaltet;
- einen Freigabezapfen (321);
- einen Verriegelungsring (31), der mindestens eine Verriegelungsrampe (313) beinhaltet, wobei sich die Verriegelungsrampe (313) aus drei Teilen, einem axialen Teil (314), einem schraubenförmigen Teil (315) und einem kreisförmigen Teil (316) zusammensetzt;
das System ist **dadurch gekennzeichnet, dass** es Folgendes beinhaltet:
- in die axiale Nut (302) des Außenringes (30) wird eine Zwischenscheibe (34) eingeführt, die dessen Drehung antreibt, und die Schräge der Freigaberampe (301) ist angepasst, um in der Entriegelungsphase mit dem Freigabezapfen (321) eines Riegels (32) zusammenzuwirken;
- in der Verriegelungsrampe (313) des Verriegelungsringes (31) gleitet translatorisch ein Zapfen (371) des Sockels (37);
- der Zapfen (371) des Sockels (37) gleitet nacheinander beim Verriegeln im axialen Teil (314), im schraubenförmigen Teil (315) und im kreisförmigen Teil (316) der Verriegelungsrampe (313);
- wobei der Riegel (32) der mindestens eine Blockierungsraste (322), mindestens einen Freigabezapfen (321) und mindestens eine Führungspassfeder (323) beinhaltet; der Riegel (32) ist in axialer Translation in Bezug auf den Verriegelungsring (31) über die Führungspassfeder (323) und eine Führungsnut (312) beweglich, wobei der Freigabezapfen (321) des Riegels (32) angepasst ist, um mit der Freigaberampe (301) des Außenringes (30) lediglich in der Entriegelungsphase zusammenzuwirken;
- das System beinhaltet eine Entriegelungsposition, in der die Blockierungsraste (322) des Riegels (32) in der Führungsnut (312) positioniert ist, wodurch der Zapfen (371) des Sockels frei ist, sich translatorisch zum schraubenförmigen Teil (315) der Verriegelungsrampe (313) zu verschieben;
- das System beinhaltet eine Verriegelungsposition, in der die Blockierungsraste (322) des Riegels (32) in der Führungsnut (312) positioniert ist, wodurch die Position des Zapfens (371) des Sockels im kreisförmigen Teil (316) der Verriegelungsrampe (313) blockiert wird;
- eine in den Außenring (30) eingeführte Zwischenscheibe (34); die Zwischenscheibe (34) besitzt eine umlaufende Passfeder (341), die durch die axiale Nut (302) des Außenringes drehverbunden ist; die Zwischenscheibe (34) besitzt ebenfalls eine seitliche Passfeder (342), die durch die Aufnahme (311) des Verriegelungsringes (31) in einer Verriegelungsphase drehverbunden ist.

2. System nach Anspruch 1, wobei sich die Zwischenscheibe (34) zusammensetzt aus:
- der umlaufenden Passfeder (341), die am umlaufenden Teil der Zwischenscheibe (34) positioniert ist, und;
- der seitlichen Passfeder (342), die an einer der Seitenflächen der Zwischenscheibe (34) positioniert ist.

3. System nach Anspruch 1, wobei das System ein elastisches Element beinhaltet, das angepasst ist, um den Riegel (32) entlang der Längsachse der Führungsnut (312) zu verschieben.

4. System nach Anspruch 2, wobei das elastische Element eine Rückstellfeder (33) ist, die zwischen dem Riegel (32) und der Zwischenscheibe (34) positioniert ist.

5. System nach Anspruch 1, wobei eine elastische Scheibe (36) zwischen dem Steckverbinderkörper (35) und dem Sockel (37) positioniert ist.

6. System nach Anspruch 1, wobei die Blockierungsraste (322) des Riegels (32) ein schiefwinkelige Schräge beinhaltet.

7. System nach Anspruch 1, wobei der Verriegelungsring (31) eine Aufnahme (311) beinhaltet.

8. System nach den Ansprüchen 2 und 7, wobei sich die seitliche Passfeder (342) der Zwischenscheibe (34) in der Aufnahme (311) platziert.

## Claims

1. Bayonet-type locking and unlocking system for a circular connector with audible indicator of locking which comprises:
- a socket (37) comprising at least one lug;
- a plug body (35) that is inserted into the socket (37);
- an external ring (30) comprising an axial slot (302) on the lower wall of the external ring (30), said external ring (30) comprises at least one unblocking ramp (301);
- an unlocking lug (321);
- a locking ring (31) comprising at least one locking ramp (313), said locking ramp (313) is comprised of three parts, an axial part (314), a helical part (315) and a circular part (316);
said system is **characterised in that** it comprises:
- in the axial slot (302) of the external ring (30) is inserted an intermediate washer (34) driving the rotation thereof, and that the slope of the unblocking ramp (301) is suitable for cooperating in the unlocking phase with an unblocking lug (321) of a locking piece (32);
- in the locking ramp (313) locking ring (31) slides in translation a lug (371) of the socket (37);
- the lug (371) of the socket (37) slides successively during the locking in the axial part (314), the helical part (315) and the circular part (316) of the locking ramp (313) ;
- a locking piece (32) comprising at least one blocking tooth (322), at least one unblocking lug (321) and at least one guideway (323); said locking piece (32) is mobile in axial translation with respect to the locking ring (31) by the intermediary of the guideway (323) and of a guide slot (312), the unblocking lug (321) of the locking piece (32) is suitable for cooperating with the unblocking ramp (301) of the external ring (30) in the unlocking phase only;
- said system comprises an unlocking position wherein the blocking tooth (322) of the locking piece (32) is positioned in the guide slot (312) leaving the lug (371) of the socket free to translate to the helical part (315) of the locking ramp (313);
- said system comprises a locking position wherein the blocking tooth (322) of the locking piece (32) is positioned in the guide slot (312) blocking the position of the lug (371) of the socket in the circular part (316) of the locking ramp (313);
- an intermediate washer (34) inserted into the external ring (30); said intermediate washer (34) has a peripheral key (341) linked in rotation by the axial slot (302) of the external ring; said intermediate washer (34) also has a side key (342) linked in rotation by the housing (311) of the locking ring (31) in the locking phase.

2. System according to claim 1, wherein the intermediate washer (34) is comprised of:
- the peripheral key (341) positioned on the peripheral portion of the intermediate washer (34), and;
- the side key (342) positioned on one of the side faces of the intermediate washer (34).

3. System according to claim 1, wherein said system comprises an elastic element suitable for displacing the locking piece (32) along the longitudinal axis of the guide slot (312).

4. System according to claim 2, wherein the elastic element is a return spring (33) positioned between the locking piece (32) and the intermediate washer (34).

5. System according to claim 1, wherein an elastic washer (36) is positioned between the plug body (35) and the socket (37).

6. System according to claim 1, wherein the blocking tooth (322) of the locking piece (32) comprises an oblique slope.

7. System according to claim 1, wherein the locking ring (31) comprises a housing (311).

8. System according to claims 2 and 7, wherein the side key (342) of the intermediate washer (34) is placed in the housing (311).
